(19) 

Europäisches Patentamt

European Patent Office

Office européen des brevets

(11) **EP 4 574 775 A1**

(12) **EUROPEAN PATENT APPLICATION**

(43) Date of publication:
  **25.06.2025 Bulletin 2025/26**

(21) Application number: **23219790.5**

(22) Date of filing: **22.12.2023**

(51) International Patent Classification (IPC):
  **C02F 1/66** *(2023.01)*    **C02F 1/68** *(2023.01)*

(52) Cooperative Patent Classification (CPC):
  **C02F 1/68; C02F 1/66;** C02F 2307/06

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **KH MA MD TN**

(71) Applicant: **mittemitte GmbH
  12047 Berlin (DE)**

(72) Inventor: **ALBUT TEPELMANN, Gülüm
  10783 Berlin (DE)**

(74) Representative: **Schulz Junghans
  Patentanwälte PartGmbB
  Großbeerenstraße 71
  10963 Berlin (DE)**

(54) **A METHOD FOR PREPARING A SYNTHETIC GRANULATE MATERIAL AND ITS USE FOR MINERALISING WATER**

(57)   The invention is related to a method for preparing a granulate material comprising the steps of
a. providing a granulate precursor, comprising silicon dioxide, aluminium oxide and one or more carbonate donors, wherein the carbonate content in the granulate precursor is 5 wt% to 20 wt%, particularly wherein the carbonate content is 10 wt% to 18 wt %, particularly, wherein the carbonate content is 13 wt% to 16 wt%
b. sintering said granulate precursor forming a granulate material.

The invention is further related to a granulate material, wherein the granulate material is characterised in that it has apermeability above $5 \times 10^{-11}$ m$^2$ in water at 25 °C.

The invention is further related to a granulate material comprising at least one tectosilicate minerals comprising silicon oxides and aluminium oxides, and one or more alkali metal and/or transition metal, wherein the carbonate content is 4 wt/ to 16 wt%.

The invention is further related to a method for mineralising water.

EP 4 574 775 A1

**Description**

Background

The production of safe and clean drinking water containing minerals required for hydration of human beings is an important goal, in developing countries as well as developed countries.

A variety of water purification processes exist, e.g. distillation. However, distillation results in total desalination requiring remineralisation of the water in order to render it usable for human consumption. This can be done by adding salts, minerals and any other nutrient.

Modern water purification systems commonly use cartridges containing a filtering media and a conditioning material. Such cartridges may be positioned into an apparatus located under the sink directly attaching it to the main water supply or in a separate water tank.

Other cartridges, as disclosed in the US patent application US 20220177336, contain a granular material for conditioning of the water and an activated carbon filter.

In order to enrich drinking water with micronutrients, the most common material used are ion-exchange resins. Such solution is disclosed in the patent EP 2539282 B1 wherein a weakly acidic ion exchange material loaded with magnesium ions is proposed to release magnesium ions into water flowing through the material. However, the use of ion-exchange material has several shortcomings, including the use of polymer materials instead of natural materials and the need of regeneration of the ion-exchange material for reuse once depleted which requires the use of high amounts of water. Additionally, the ion-exchange material is required to be stored wet, which impacts its storage conditions, e.g. storage temperature, storage pressure, etc, and has overall a limited shelf life. Furthermore, the risk of bacterial contamination of the ion-exchange material is increased by the wet storage.

Another solution to enrich drinking water is the use of natural minerals. In this case, the conditioning material is or comprises grains or granules of naturally occurring minerals such as polymorphs of calcium carbonate, magnesium carbonate, magnesium oxide, zinc oxide etc. Minerals of interest are typically carbonates, oxides, silicates, sulphates or aluminates. An example of such solution is provided in the patent application US 20200207651 where water passes through a salt column, which is constituted of dolomite among others. Magnesium, calcium and bicarbonate ions dissolve due to the passage of water. Such methods, however, have limitations including the rate of dissolution which varies over time, leading to an irregular release of ions. The dissolution rate may be too low or too high leading to a released mineral concentration that is very low or early depletion of the cartridge and the risk of overshooting the recommended daily concentrations of some minerals, respectively. Additionally, some minerals are difficult to find in compositions which are safe for human health as is the case for zinc, which his often found in minerals also containing arsenic.

A further known solution is to use sintered porous granules of minerals as disclosed in Ravindran et al. (2019). However, the material described herein is highly porous and cannot be used in water purification systems under pressure. Additionally, such highly porous granules may suffer from irregular release of ions as the cavities are very large and the flow of water may dissolve the minerals stored in the cavities quickly resulting in overshooting the daily concentrations of some minerals, and are highly dependent on the flow-rate and contact time with water, which in turn varies among water purification systems.

Based on the above-mentioned state of the art, the objective of the present invention is to provide means and methods to provide superior conditioning materials capable of mineralising a flow of water with a regular release of ions of interest. This objective is attained by the subject-matter of the independent claims of the present specification, with further advantageous embodiments described in the dependent claims, examples, figures and general description of this specification.

Summary of the Invention

A first aspect of the invention relates to method for preparing a granulate material comprising the steps of

> a. providing a granulate precursor, comprising silicon dioxide, aluminium oxide and one or more carbonate donor, wherein the carbonate content in the granulate precursor is 5 wt% and 20 wt%,
> b. sintering said granulate precursor forming a granulate material.

A second aspect of the invention relates to a granulate material obtained by the method according to the first aspect of the invention, wherein the granulate material is characterised in that it has a permeability above $5 \times 10^{-11}$ m$^2$ in water at 25 °C.

A third aspect of the invention relates to a granulate material comprising at least one tectosilicate minerals comprising silicon oxide and aluminium oxide, and one or more alkali metal and/or transition metal, wherein the carbonate content is 3 wt% to 18 wt%.

A fourth aspect of the invention relates to a method for mineralising water comprising the steps of

> a. providing a granulate material according to the first or second or third aspect of the invention,
> b. running water through said granulate material using a flow rate of 0.5 to 4 L/min,
> c. releasing ions from said granulate material.

*Terms and definitions*

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

The term *granulate material* in the context of the present specification relates to a large conglomeration of macroscopic, individually solid and insoluble round particles or grains of natural composition.

The term *carbonate donor* in the context of the present specification relates to inorganic salts comprising a carbonate anion and a mineral cation. Carbonate donors donate carbonate to the system of interest while the mineral cation is stored as such in the system. Examples for mineral cations include but are not limited to calcium, potassium, magnesium, sodium, zinc and lithium.

The term *mineral donor* in the context of the present specification relates to inorganic salts comprising a mineral cation and an inorganic or organic anion. Both the mineral cation and the inorganic or organic anion are ionised when in contact with water providing minerals in drinking water for human consumption.

The term *paste* in the context of the present specification relates to a heterogenic suspension and/or agglomeration comprising water and mixed powders of inorganic and organic salts.

The term *sintering* in the context of the present specification relates to the process of compacting and forming a solid mass of material by heat to the point of liquefaction, without melting it.

The term *wt%* in the context of the present specification relates to the weight percentage in relation to the total mass of the respective mixture.

The term *carbonate content* in the context of the present specification relates to the total sum of weight percentage of present carbonate donors as such, i.e. added carbonate donors are 15 wt% $Na_2CO_3$, 3 wt% $K_2CO_3$ and 82 wt% other non-carbonate containing compounds, the carbonate content is 18 wt%.

The term *permeability* in the context of the present specification relates to the ability of a porous solid material, or a bed of granular material, to allow fluids, particularly water, to pass through it. The permeability is measured in $m^2$ or Darcy (d).

Any patent document cited herein shall be deemed incorporated by reference herein in its entirety.

Detailed Description of the Invention

A first aspect of the invention relates to method for preparing a granulate material comprising the steps of

    c. providing a granulate precursor, comprising silicon dioxide, aluminium oxide and one or more carbonate donor, wherein the carbonate content in the granulate precursor is 5 wt% and 20 wt%,

    d. sintering said granulate precursor forming a granulate material.

Carbonates, when present in mineral compositions during sintering contribute to the overall sintering behaviour in several ways.

One effect is fluxing, wherein carbonates act as fluxing agents during sintering. The resulting fluxes help to lower the melting point of minerals, promoting the formation of liquid phases that aid in particle bonding and densification. Carbonates decompose at elevated temperatures, releasing gaseous carbon dioxide and leaving behind reactive oxides that participate in the sintering reactions as well as leaving cavities behind in the sintered body, which increases the surface area the incoming water can come into.

Another effect of the presence of carbonates in the mineral composition during sintering is particle bonding, wherein carbonates, during sintering, react with other minerals present in the composition, forming intermediate compounds or solid solutions. Such reactions contribute to the development of chemical bonds between particles, facilitating densification and enhancing the mechanical strength of the sintered material.

Furthermore, carbonates may undergo phase transformations during sintering, influencing the overall sintering behaviour, wherein for example calcium carbonate may transform into calcium oxide and carbon dioxide. Such transformations lead to changes in the mineral structure, chemical composition and mechanical properties of the sintered material.

Another effect is pore formation and control, wherein the released gaseous carbon dioxide and other gaseous by-products during sintering create pores or voids within the granulate material influencing the density and porosity of the granulate material. The controlled formation of porosity is desirable in sintered materials as it can affect properties like permeability, mechanical strength, and thermal insulation of the sintered material, as well as increase the surface area.

A carbonate content of above 20% provokes excessive gas formation leading to the formation of large voids, cracks or blowouts in the sintered material. This results in a granulate material of poor structural integrity and strength rendering the granulate material fragile and friable. The use of such fragile and friable granulate material in a cartridge inside a water dispensing device would lead to a break-up of the fragile granulate material. The broken granulate material leads to an increase in packing density, which increases the pressure losses through the cartridge, and may lead to failure of the device due to an increase in the resistance to the flow in such devices which stalls the pump. Additionally, the broken granulate material will lead to a release of small particles that clog the downstream filter.

A carbonate content below 20 % provides improved granulate material with high mechanical strength and great structural integrity.

The sintering process allows for the necessary mineral phase transformations of the components silicon dioxide and aluminium oxide to take place

In certain embodiments, the method for preparing a granulate material comprises the steps of

> a. providing a granulate precursor, comprising silicon dioxide, aluminium oxide and one or more carbonate donor, wherein the carbonate content in the granulate precursor 10 wt% to 18 wt %,
> b. sintering said granulate precursor forming a granulate material.

In certain embodiments, the method for preparing a granulate material comprises the steps of

> a. providing a granulate precursor, comprising silicon dioxide, aluminium oxide and one or more carbonate donor, wherein the carbonate content in the granulate precursor is 13 wt% to 16 wt%,
> b. sintering said granulate precursor forming a granulate material.

A carbonate content of 13 to 16 wt% is ideal to prepare an improved granulate material with high mechanical strength and great structural integrity allowing for a controlled mineral release when used in a cartridge inside a water dispensing device.

In certain embodiments, the molar ratio of silicon to aluminium is in the range of 14:1 and 20:1.

Silica and aluminium provide a template with chemical inertness and structural integrity. A ratio of Si to Al in the range of 14:1 and 20:1 allows for the creation of a nature mimicking template of tectosilicate which can be loaded with minerals of interest.

In certain embodiments, the one or more carbonate donor is selected from potassium carbonate, sodium carbonate, calcium carbonate and/or magnesium carbonate.

In certain embodiments, the one or more carbonate donor is potassium carbonate and/or sodium carbonate.

In certain embodiments, the one or more carbonate donor is sodium carbonate.

In certain embodiments, the one or more carbonate donor is sodium carbonate and potassium carbonate.

In certain embodiments, the method further comprises at least one mineral donor.

In certain embodiments, the cation of the at least one mineral donor is selected from calcium, potassium, magnesium, sodium, zinc, manganese, cobalt, nickel, copper and iron.

In certain embodiments, the cation of the at least one mineral donor is selected from calcium, potassium, magnesium, sodium and zinc.

In certain embodiments, the cation of one of the at least one mineral donor is zinc.

In certain embodiments, the anion of the at least one mineral donor is selected from oxide, chloride, sulphate, phosphate, carbonate and iodide.

In certain embodiments, the anion of the at least one mineral donor is selected from oxide, chloride and carbonate.

In certain embodiments, the anion of the at least one mineral donor is selected from oxide and carbonate.

In certain embodiments, the anion of one of the at least one mineral donor is oxide.

In certain embodiments, one of the at least one mineral donor is zinc oxide.

The addition of zinc oxide allows for a safe release of zinc ions into the drinking water. Additionally, zinc oxide increases the strength and stability of the granulate material.

In certain embodiments, the method for preparing a granulate material comprises the steps of

a. providing a granulate precursor, comprising silicon dioxide, aluminium oxide, one or more carbonate donor and one or more mineral donor, wherein the carbonate content in the granulate precursor is 5 wt% and 20 wt%,
b. sintering said granulate precursor forming a granulate material.

In certain embodiments, the method for preparing a granulate material comprises the steps of

a. providing a granulate precursor, comprising silicon dioxide, aluminium oxide, one or more carbonate donor and one or more mineral donor, wherein the carbonate content in the granulate precursor is 10 wt% and 18 wt%,
b. sintering said granulate precursor forming a granulate material.

In certain embodiments, the method for preparing a granulate material comprises the steps of

a. providing a granulate precursor, comprising silicon dioxide, aluminium oxide, one or more carbonate donor and one or more mineral donor, wherein the carbonate content in the granulate precursor is 13 wt% and 16 wt%,
b. sintering said granulate precursor forming a granulate material.

In certain embodiments, the method for preparing a granulate material comprises the steps of

a. providing a granulate precursor, comprising silicon dioxide, aluminium oxide, sodium carbonate and zinc oxide, wherein the carbonate content in the granulate precursor is 5 wt% and 20 wt%,
b. sintering said granulate precursor forming a granulate material.

In certain embodiments, the method for preparing a granulate material comprises the steps of

a. providing a granulate precursor, comprising silicon dioxide, aluminium oxide, sodium carbonate, potassium carbonate and zinc oxide, wherein the carbonate content in the granulate precursor is 5 wt% and 20 wt%,
b. sintering said granulate precursor forming a granulate material.

In certain embodiments, the granulate precursor is prepared comprising the steps of

a. providing a mixture comprising silicon dioxide, aluminium oxide, and one or more carbonate donor powder, forming a powder mixture,
b. adding water to said powder mixture forming a paste,
c. shaping said paste into spherical granules,
d. drying said spherical granules forming the granulate precursor.

In certain embodiments, the granulate precursor is prepared comprising the steps of

a. providing a mixture comprising silicon dioxide, aluminium oxide, at least one mineral donor, and one or more carbonate donor powder, forming a powder mixture,
b. adding water to said powder mixture forming a paste,
c. shaping said paste into spherical granules,
d. drying said spherical granules forming the granulate precursor.

In certain embodiments, the ratio of weight percentage of powder mixture and water is 65 wt%:35 wt%.
In certain embodiments, the spherical granules are 3 to 9 mm in size.
In certain embodiments, the spherical granules are dried in a heat chamber.
In certain embodiments, the spherical granules are dried at atmospheric pressure.
In certain embodiments, the granulate precursor is sintered at 750 to 850 °C.
In certain embodiments, the granulate precursor is sintered at 800 to 850 °C.
In certain embodiments, the granulate material has a permeability above $5 \times 10^{-11}$ m$^2$ in water at 25 °C
In certain embodiments, the granulate material maintains its structural integrity up to a backpressure of 2 bar.
A second aspect of the invention relates to a granulate material obtained by the method according to the first aspect of the invention, wherein the granulate material is characterised in that it has a permeability above $5 \times 10^{-11}$ m$^2$ in water at 25 °C.
The more coarse the granulate material, the higher its permeability allowing the water to pass at a constant target flow the rate.
The permeability describes how much a given length of packed granulate material, e.g. in a cartridge, will resist a flow of water, wherein the resistance of said flow results in a backpressure within the system for a fixed flow velocity.
In certain embodiments, the granulate material obtained by the method according to the first aspect of the invention is further characterised in that permeability of the granulate material remains above $5 \times 10^{-11}$ m$^2$ in water at 25 °C after a water percolation of 300 L
In certain embodiments, structural integrity of the granulate material is sustained up to a pressure of 2 bar.

The granulate material when used in a cartridge in a filtering system remains intact when pressure is applied on the granulate material. Granulate material with a higher porosity will lose its structural integrity when pressure is applied to the material and disintegrate into a fine material with decreased permeability, causing an increase in backpressure and decrease of the target flow rate over time.

In certain embodiments, the granulate material obtained by the method according to the first aspect of the invention, wherein the granulate material is characterised in that it has a permeability above $5 \times 10^{-11}$ m² in water at 25 °C at a pressure of up to 2 bar.

In certain embodiments, the granulate material is prepared comprising the steps of

a) providing a granulate precursor, comprising silicon dioxide, aluminium oxide, at least one mineral donor, and one or more carbonate donor, wherein the carbonate donor is defined as in the first aspect of the invention, and wherein the carbonate content in the granulate precursor is 5 wt% and 20 wt%,
b) sintering said granulate precursor forming a granulate material.

In certain embodiments, the granulate precursor is prepared comprising the steps of

a) providing a mixture comprising silicon dioxide powder, aluminium oxide powder, at least one mineral donor powder, and one or more carbonate donor powder, forming a powder mixture, wherein the carbonate donor is defined as in the first aspect of the invention,
b) adding water to said powder mixture forming a paste,
c) shaping said paste into spherical granules,
d) drying said spherical granules forming the granulate precursor.

A third aspect of the invention relates to a granulate material comprising at least one tectosilicate mineral comprising silicon oxide and aluminium oxide, and one or more alkali metal and/or transition metal, wherein the carbonate content is 4 wt% to 16 wt%

A fourth aspect of the invention relates to a method for mineralising water comprising the steps of

a. providing a granulate material according to the first, or second, or third aspect of the invention,
b. running water through said granulate material using a flow rate of 0.5 to 4 L/min,
c. releasing ions from said granulate material.

The granulate material according to the first or second or third aspect of the invention used in a method for mineralising water, for example in a cartridge inside a water purification and dispensing system allow for a controlled ion release.

In certain embodiments, gaseous $CO_2$ is injected into water prior to running water through the granulate material, yielding acidified water.

The acidification of water through injection of gaseous carbon dioxide facilitates the release of ions from the granulate material allowing for a controlled and regular ion release.

In particular, granulate material made from a reduced carbonate content, though leading to less fragile granules, can, in turn, make the release of ions more difficult because such granules break apart less readily. Acidification of water can balance this effect by having such granulate material to dissolve more easily.

In certain embodiments, the acidified water has a pH value between 6.5 to 6.8.

In certain embodiments, the flow rate is 0.5 to 2 L/min.

The invention is further illustrated by the following examples and figures, from which further embodiments and advantages can be drawn. These examples are meant to illustrate the invention but not to limit its scope.

*Description of the Figures*

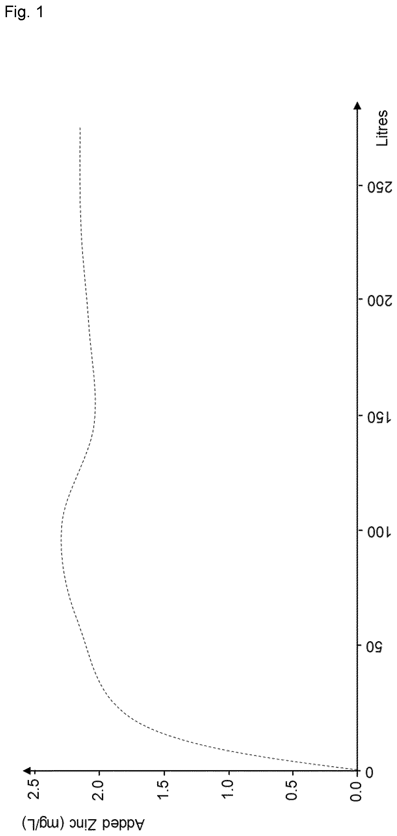

Fig. 1  shows the release of zinc ions into Berlin tap water. The amount of zinc ions released into the water from the granulate material remains constant at a concentration around 2 mg/l for up to 280 L of water which passed through the granulate material.

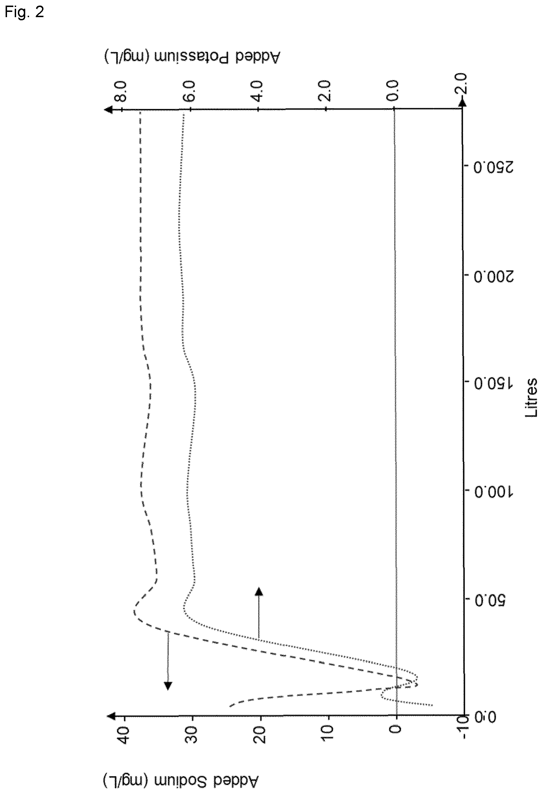

Fig. 2  shows the release of sodium (dashed-line read on the left axis) and potassium (dotted-line read on the right axis) ions in to Berlin tap water. The amount of sodium and potassium released into the water from the granulate material remains constant at concentrations of around 30 and 6 mg/l, respectively, for up to 280 L of water which passed through the granulate material.

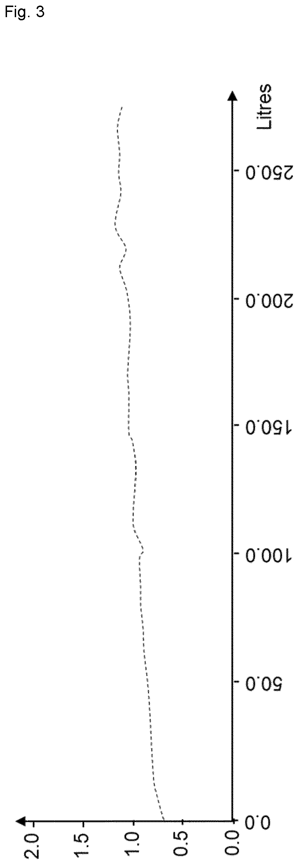

Fig. 3  shows a back pressure profile of sintered granulate material prepared from 60 wt% $SiO_2$, 3.55 wt% $Al_2O_3$, 15 wt% $Na_2CO_3$ and 21 wt% ZnO. A prototype cartridge, filled with 31.5 g of sintered granulate material infused with zinc oxide is added to the water dispensing system and water is passed through the cartridge at a flow rate of 1.01 L/min. The general pressure stayed below 2 bar and at an average of 0.55 bar over 275 L of water, indicating no degradation of granulate material made from carbonate contents of 15 wt%, and resulting in no clogging of the which would result in increased back pressure.

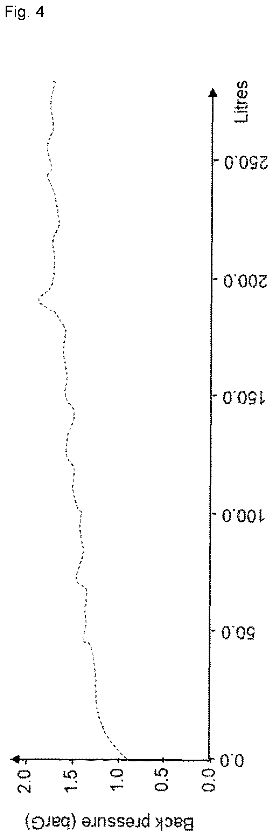

Fig. 4    shows a back pressure profile of sintered granulate material prepared from 74.1 wt% $SiO_2$, 4.3 wt% $Al_2O_3$, 16.2 wt % $Na_2CO_3$ and 5.75 wt% $K_2CO_3$, and thus a total carbonate content of >20 wt%. A mock-up cartridge, filled with 30 g of sintered granulate material and quartz sand as a filler material, is added to the water dispensing system and water is passed through the cartridge at a flow rate of 1.01 L/min. The average back pressure exceeded 2 bar by 170 L of water passing through the cartridge and remained at 2.2 to 2.6 bar afterwards, indicating degradation of granulate material made from carbonate contents of >20 wt%, and resulting clogging of the filter.

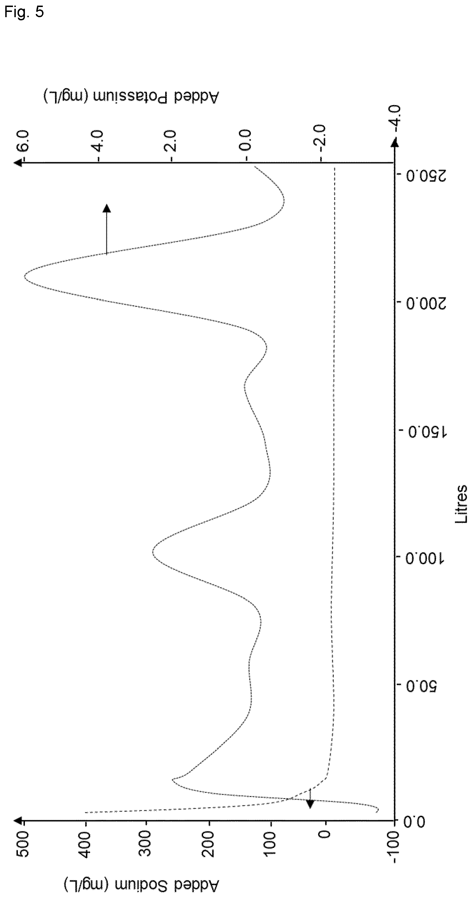

Fig. 5    shows the release of sodium (dashed line read on the left axis) and potassium (dotted line read on the right axis) from sintered granulate material prepared from 74.1 wt% $SiO_2$, 4.3 wt% $Al_2O_3$, 16.2 wt % $Na_2CO_3$ and 5.75 wt% $K_2CO_3$, and thus a total carbonate content of >20 wt%. A prototype cartridge, filled with 30 g of sintered granulate material, is added to the water dispensing system and water is passed through the cartridge at a flow rate of 1.01 L/min. The sodium was released into the water within the first 40 litres at a concentration of 400 mg/L, after which the sodium is exponentially depleted. Potassium is released in arbitrary periods and amounts of up to 6 mg/L. These data shows that sodium and potassium are not successfully trapped within the pores of the sintered granulate material allowing a controlled release but implies that the porosity of the granulate material is too high, due to the high carbonate content resulting in immediate interaction of the sodium and potassium ions with water and their uncontrollable release.

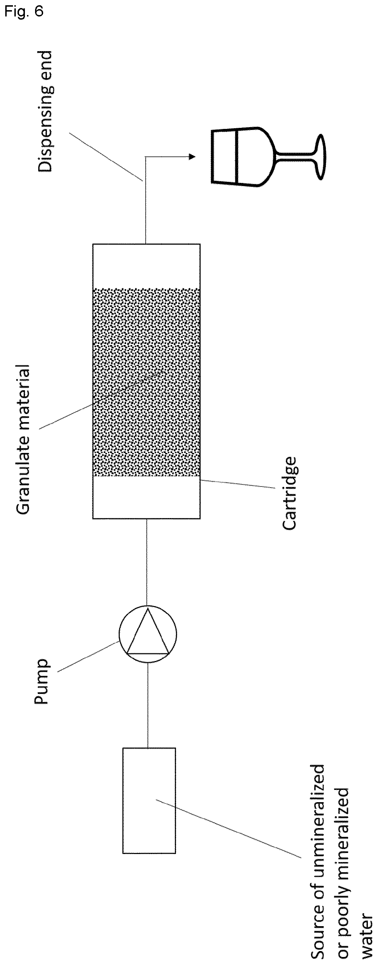

Fig. 6    shows a simplified setup of a water dispensing system to mineralise or re-mineralise water which uses the granulate material of the present invention in a cartridge. The water is pumped through the cartridge containing the granulate material at a set flow rate and released into a container, e.g. a glass or a bottle.

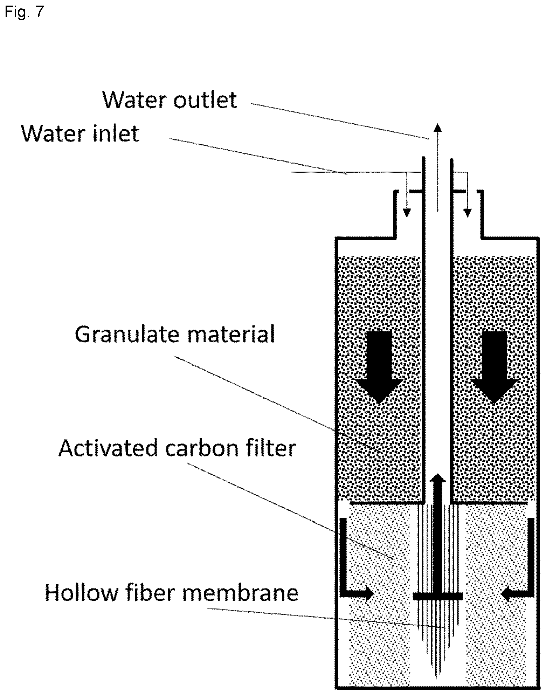

Fig. 7    shows a cartridge as used in a water dispensing system to mineralise or re-mineralise water containing the granulate material of the present invention, as well as an activated carbon filter, which further filters particles from the water, and the flow path of the water (along the arrows).

## Examples

### *Example 1: Preparation of a granulate material*

The following compositions were prepared:

1) SiOz powder and $Al_2O_3$ powder were mixed together with sodium carbonate and zinc oxide in a ratio of 60:3.55:15:21 ($SiO_2$ : $Al_2O_3$: $Na_2CO_3$: ZnO) by wt%, to a homogenous powder mixture.
2) SiOz powder and $Al_2O_3$ powder were mixed together with solid sodium carbonate, solid potassium carbonate and solid zinc oxide in a ratio of 60:3.55:10:5:21 (SiOz : $Al_2O_3$ : $Na_2CO_3$: $K_2CO_2$ : ZnO) by wt%, to a homogenous powder mixture.

A minimum of 35 wt% of the total mass of one of the above mixtures of water was added to the powder mixture to form a paste.

The paste is transferred into a heat resistant, non-stick mould and/or granulated into the shape of balls or pellets with a diameter of around 10 mm.

The shaped paste material is put into an oven where the material is heated up to 600°C at a rate of 100°C per hour to drive out any remaining water.

Afterwards, the dried paste is sintered at elevated temperatures in a kiln (Nabertherm Top 45 mit B500) with the following sintering profile:

1) 600 °C to 850 °C for one hour
2) 850 °C for one hour.

The kiln is switched off afterwards to cool down.

### *Example 2: Determination of the permeability*

The water is pumped through the cartridge at different flow rates and the pressure before the cartridge is detected on a connected pressure gauge. The measured pressure is plotted against the flow rate and the permeability is calculated using Darcy's law (

$$k = v * \frac{\eta \Delta x}{\Delta P}$$

).

The permeability of a volume of synthetic granules was an average of $2.9*10^{-9}$ $m^2$.

### *Cited prior art documents:*

US 20220177336

EP 2539282 B1

US 20200207651

All scientific publications and patent documents cited in the present specification are incorporated by reference herein.

**Claims**

1. A method for preparing a granulate material comprising the steps of

   a. providing a granulate precursor, comprising silicon dioxide, aluminium oxide, and one or more carbonate donors, wherein the carbonate content in the granulate precursor is 5 wt% to 20 wt%, particularly wherein the carbonate content is 10 wt% to 18 wt %, more particularly, wherein the carbonate content is 13 wt% to 16 wt%
   b. sintering said granulate precursor forming a granulate material.

2. The method according to claim1, wherein the one or more carbonate donor is selected from potassium carbonate, sodium carbonate, calcium carbonate and/or magnesium carbonate, particularly the one or more carbonate donor is potassium carbonate and/or sodium carbonate.

3. The granulate material according to any of the preceding claims, further comprising at least one mineral donor.

4. The method according to claim 3, wherein the cation of the at least one mineral donor is selected from calcium, potassium, magnesium, sodium, zinc, manganese, cobalt, nickel, copper and iron, particularly from calcium, potassium, magnesium, sodium and zinc.

5. The method according to claims 3 and 4, wherein the anion of the at least one mineral donor is selected from oxide, chloride, sulphate, phosphate, carbonate and iodide, particularly from oxide, chloride and carbonate, more particularly from oxide and carbonate.

6. The method according to any of the preceding claims, wherein the granulate precursor is prepared comprising the steps of

   a. providing a mixture comprising two or more metal oxide powder, and one or more carbonate donor powder, forming a powder mixture,
   b. adding water to said powder mixture forming a paste,
   c. shaping said paste into spherical granules,
   d. drying said spherical granules forming the granulate precursor.

7. The method according to any of the preceding claims, wherein the granulate precursor is sintered at 750 to 850 °C, particularly wherein the granulate precursor is sintered at 800 to 850 °C.

8. The method according to any of the preceding claims, wherein the granulate material has a permeability above 5 x $10^{-11}$ m$^2$ in water at 25 °C.

9. A granulate material obtained by the method according to claims 1 to 8, wherein the granulate material is **characterised in that** it has a permeability above 5 x $10^{-11}$ m$^2$ in water at 25 °C

10. The granulate material according to claim 9, further **characterised in that** permeability of the granulate material remains above 5 x $10^{-11}$ m$^2$ in water at 25 °C after a water percolation of 300 L.

11. A granulate material comprising at least one tectosilicate mineral comprising silicon oxide and aluminium oxide, and one or more alkali metal and/or transition metal, wherein the carbonate content is 4 wt% to 16 wt%.

12. A method for mineralising water comprising the steps of

    a. providing a granulate material according to claims 1 to 8, or 9 to 10, or 11,
    b. running water through said granulate materials using a flow rate of 0.5 to 4 L/min,
    c. releasing ions from said granulate material.

13. The method according to claim 12, wherein gaseous $CO_2$ is injected into water prior to running water through the granulate material, yielding acidified water.

14. The method according to claim 13, wherein the acidified water has a pH value between 6.5 to 6.8.

Fig. 1

Fig. 2

Fig. 3

Fig. 4

Fig. 5

Fig. 6

Dispensing end

Granulate material

Cartridge

Pump

Source of unmineralized or poorly mineralized water

Fig. 7

Water outlet

Water inlet

Granulate material

Activated carbon filter

Hollow fiber membrane

# EP 4 574 775 A1

**EUROPEAN SEARCH REPORT**

Europäisches Patentamt
European Patent Office
Office européen des brevets

Application Number

EP 23 21 9790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 100 390 098 C (ZIBO BONA SCIENCE AND TECHNOLO [CN]) 28 May 2008 (2008-05-28) * page 1, line 1 – page 6, line 65 * ----- | 1-14 | INV. C02F1/66 C02F1/68 |
| A | US 10 046 992 B2 (SKOVBY MICHAEL [CH]; POFFET MARTINE [CH] ET AL.) 14 August 2018 (2018-08-14) * the whole document * ----- | 1-14 | |
| A | KR 2013 0041006 A (KANG SUNG MO [US]) 24 April 2013 (2013-04-24) * the whole document * ----- | 1-14 | |

TECHNICAL FIELDS
SEARCHED      (IPC)

C02F

The present search report has been drawn up for all claims

| Place of search | Date of completion of the search | Examiner |
|---|---|---|
| The Hague | 18 March 2024 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9790

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | | | Publication date | Patent family member(s) | | Publication date |
|---|---|---|---|---|---|---|
| CN 100390098 | C | | 28-05-2008 | NONE | | |
| US 10046992 | B2 | | 14-08-2018 | AU | 2011288455 A1 | 21-02-2013 |
| | | | | BR | 112013002969 A2 | 07-06-2016 |
| | | | | CA | 2807037 A1 | 16-02-2012 |
| | | | | CL | 2013000415 A1 | 26-07-2013 |
| | | | | CN | 103080021 A | 01-05-2013 |
| | | | | CO | 6670587 A2 | 15-05-2013 |
| | | | | CY | 1116073 T1 | 08-02-2017 |
| | | | | DK | 2418177 T3 | 09-03-2015 |
| | | | | DK | 2611738 T3 | 11-01-2016 |
| | | | | EP | 2418177 A1 | 15-02-2012 |
| | | | | EP | 2611738 A1 | 10-07-2013 |
| | | | | ES | 2532294 T3 | 25-03-2015 |
| | | | | ES | 2556407 T3 | 15-01-2016 |
| | | | | HR | P20150250 T1 | 05-06-2015 |
| | | | | HR | P20151292 T1 | 01-01-2016 |
| | | | | HU | E026938 T2 | 28-07-2016 |
| | | | | IL | 224462 A | 28-09-2017 |
| | | | | JO | 3162 B1 | 20-09-2017 |
| | | | | JP | 5799101 B2 | 21-10-2015 |
| | | | | JP | 2013535332 A | 12-09-2013 |
| | | | | KR | 20130079497 A | 10-07-2013 |
| | | | | MA | 34514 B1 | 02-09-2013 |
| | | | | ME | 02068 B | 20-05-2015 |
| | | | | MX | 349686 B | 09-08-2017 |
| | | | | MY | 153083 A | 31-12-2014 |
| | | | | PL | 2418177 T3 | 29-05-2015 |
| | | | | PL | 2611738 T3 | 29-02-2016 |
| | | | | PT | 2418177 E | 02-03-2015 |
| | | | | PT | 2611738 E | 22-01-2016 |
| | | | | RU | 2013110842 A | 20-09-2014 |
| | | | | SG | 187824 A1 | 28-03-2013 |
| | | | | SI | 2418177 T1 | 31-03-2015 |
| | | | | SI | 2611738 T1 | 31-12-2015 |
| | | | | SM | T201500050 B | 05-05-2015 |
| | | | | SM | T201500325 B | 25-02-2016 |
| | | | | TW | 201206843 A | 16-02-2012 |
| | | | | US | 2013164411 A1 | 27-06-2013 |
| | | | | WO | 2012020056 A1 | 16-02-2012 |
| | | | | ZA | 201301529 B | 30-04-2014 |
| KR 20130041006 | A | | 24-04-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220177336 A
- EP 2539282 B1
- US 20200207651 A